# EUROPÄISCHE PATENTSCHRIFT

(11) **EP 3 475 128 B1**
(45) Veröffentlichungstag und Bekanntmachung des Hinweises auf die Patenterteilung: **12.08.2020**
(21) Anmeldenummer: 17729857.7
(22) Anmeldetag: 13.06.2017
(51) Int. Cl.: B60S 1/38, B60S 1/40

(54) **WISCHBLATTADAPTERVORRICHTUNG**
WIPER BLADE ADAPTER DEVICE
DISPOSITIF ADAPTATEUR DE BALAI D'ESSUIE-GLACE

(30) Priorität: 22.06.2016 DE 102016211162
(43) Veröffentlichungstag der Anmeldung: 01.05.2019
(73) Patentinhaber: Robert Bosch GmbH, 70442 Stuttgart (DE)
(72) Erfinder: BENCSIK, Barnabas, 2473 Val (HU); TRUYENS, Stijn, 3300 Tienen (BE); KRAEMER, Godelieve, 76549 Huegelsheim (DE); LAMMENS, Koen, 3001 Heverlee (BE); VERELST, Hubert, 3300 Tienen (BE); BUBBA, Marcello, 3210 Linden (BE)
(86) Internationale Anmeldenummer: PCT/EP2017/064376
(87) Internationale Veröffentlichungsnummer: WO 2017/220374

(56) Entgegenhaltungen:
- WO-A1-2013/186111
- DE-A1-102013 220 255

## Beschreibung

### Stand der Technik

Es ist bereits eine Wischblattadaptervorrichtung mit einem Adaptergrundkörper vorgeschlagen worden, der dazu vorgesehen ist, fest mit einem Wischblattbauteil verbunden zu werden, und mit einer Adaptereinheit, die zu einer lösbaren Kopplung mit einem Wischarmadapter vorgesehen ist, und wobei die Adaptereinheit dazu vorgesehen ist, mit dem Adaptergrundkörper über eine Rastverbindung verbunden zu werden. Die DE 10 2013 220 255 A1 offenbart eine solche Wischblattadaptervorrichtung.

### Offenbarung der Erfindung

Die Erfindung geht aus von einer Wischblattadaptervorrichtung mit einem Adaptergrundkörper, der dazu vorgesehen ist, fest mit einem Wischblattbauteil verbunden zu werden, und mit einer Adaptereinheit, die zu einer lösbaren Kopplung mit einem Wischarmadapter vorgesehen ist, und wobei die Adaptereinheit dazu vorgesehen ist, mit dem Adaptergrundkörper über eine Rastverbindung verbunden zu werden.

Es wird vorgeschlagen, dass die Adaptereinheit zumindest ein Rastmittel zur Verrastung mit dem Adaptergrundkörper umfasst, das dazu vorgesehen ist, bei einer Montage mit dem Adaptergrundkörper zumindest teilweise in Richtung einer Längsmittelebene der Adaptereinheit ausgelenkt zu werden. Dadurch kann das zumindest eine Rastmittel besonders kraftsparend ausgelenkt und gleichzeitig eine hohe Betriebssicherheit bereitstellen. Eine Bauhöhe der Adaptereinheit kann vorteilhaft besonders gering gehalten werden. Der Adaptergrundkörper bildet vorteilhaft Seitenkrallen aus, die zu einem Umgreifen von Federschienen eines Wischblatts vorgesehen sind. Bevorzugt ist die Wischblattadaptervorrichtung ein Teil eines Wischblatts.

Der Adaptergrundkörper ist bevorzugt zumindest im Wesentlichen, besonders bevorzugt vollständig, aus einem Kunststoff ausgebildet. Unter "zumindest im Wesentlichen ausgebildet" soll in diesem Zusammenhang, bezogen auf einen Volumen- und/oder einen Masseanteil, insbesondere zu mehr als 50 %, bevorzugt zu mehr als 80%, besonders bevorzugt zu mehr als 95 % ausgebildet verstanden werden. Unter "fest verbunden" soll in diesem Zusammenhang insbesondere eine unlösbare Verbindung von zumindest zwei Elementen verstanden werden, die dazu vorgesehen ist, nur durch eine zumindest teilweise Zerstörung von zumindest einem Bauteil und/oder durch ein spezielles Werkzeug und/oder durch eine Fachkraft gelöst zu werden. Unter einem "Wischblattbauteil" soll in diesem Zusammenhang insbesondere ein Bauteil eines Wischblatts verstanden werden, wie insbesondere eine Federschiene, eine Wischleiste, eine Wischlippe und/oder ein Windabweiserelement.

Unter einem "Rastmittel" soll in diesem Zusammenhang insbesondere ein federelastisches Mittel zur Herstellung einer Rastverbindung verstanden werden, das dazu vorgesehen ist, bei einer Montage aus einer Ausgangslage elastisch entgegen einer Federkraft ausgelenkt zu werden. Das Rastmittel ist insbesondere dazu vorgesehen, bei der Montage mit dem Adaptergrundkörper zumindest teilweise in Richtung einer Längsmittelebene der Adaptereinheit entgegen einer Federkraft ausgelenkt zu werden. Insbesondere ist das Rastmittel dazu vorgesehen bei der Montage mit dem Adaptergrundkörper zumindest teilweise hin zur Längsmittelebene der Adaptereinheit entgegen einer Federkraft ausgelenkt zu werden. Bevorzugt bewegt sich das Rastmittel bei einem Erreichen einer Endmontageposition mittels der Federkraft zurück in die Ausgangslage. Unter einer "Adaptereinheit" soll in diesem Zusammenhang insbesondere eine Einheit verstanden werden, die dazu vorgesehen ist, einen Kopplungsbereich für eine Kopplung und/oder Kontaktierung mit einem Wischarmadapter bereitzustellen. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Vorteilhaft bildet der Wischarmadapter einen Endbereich einer Wischstange aus. Weiterhin vorteilhaft ist der Wischarmadapter einstückig mit der Wischstange ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Unter "in Richtung einer Längsmittelebene" soll in diesem Zusammenhang insbesondere verstanden werden, dass eine Richtungskomponente einer Bewegung senkrecht zur Längsmittelebene hin verläuft. Unter einer "Längsmittelebene" soll in diesem Zusammenhang insbesondere eine gedachte Ebene verstanden werden, die sich senkrecht zu einer Wischrichtung erstreckt und durch einen geometrischen Mittelpunkt und/oder einen Schwerpunkt des Adaptergrundkörpers verläuft. Die Wischrichtung verläuft zumindest im Wesentlichen parallel zu einer Auslenkrichtung des zumindest einen Rastmittels. Insbesondere steht sie Längsmittelebene zumindest im Wesentlichen senkrecht zu einer zu wischenden Oberfläche. Unter zumindest im Wesentlichen parallel bzw. senkrecht soll in diesem Zusammenhang insbesondere eine Abweichung von weniger als 30°, vorzugsweise weniger als 10° und besonders bevorzugt weniger als 5° verstanden werden. Insbesondere verläuft die Längsmittelebene entlang einer Längsrichtung des Adaptergrundkörpers. Unter einer "Längsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Die Wischrichtung verläuft insbesondere senkrecht zur Längsrichtung und parallel zur zu wischenden Oberfläche. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die Adaptereinheit zumindest ein weiteres Rastmittel zur Verrastung mit dem Adaptergrundkörper umfasst, das dazu vorgesehen ist, bei einer Montage mit dem Adaptergrundkörper zumindest teilweise in Richtung des zumindest einen Rastmittels ausgelenkt zu werden. Dadurch kann eine besonders sichere Befestigung zwischen der Adaptereinheit und dem Adaptergrundkörper erzielt werden. Bevorzugt ist das zumindest eine weitere Rastmittel dazu vorgesehen, bei einer Montage mit dem Adaptergrundkörper zumindest teilweise in Richtung des zumindest einen Rastmittels entgegen einer Federkraft ausgelenkt zu werden. Insbesondere sind das Rastmittel und das weitere Rastmittel dazu vorgesehen, bei einer Montage entgegen einer Federkraft aufeinander zu bewegt zu werden.

Des Weiteren wird vorgeschlagen, dass das zumindest eine Rastmittel und das zumindest eine weitere Rastmittel jeweils eine Anlagefläche zur Anlage an den Wischarmadapter umfassen, die in einem unausgelenkten Zustand einen Abstand zueinander aufweisen, die einer Breite des Wischarmadapters zumindest im Wesentlichen entspricht. Unter "zumindest im Wesentlichen entsprechen" soll in diesem Zusammenhang insbesondere mit einer Abweichung von weniger als 5 %, bevorzugt von weniger als 1 % verstanden werden.

Dadurch kann ein Kopplungsbereich für den Wischarmadapter besonders kompakt und stabil ausgebildet werden. Eine Betriebssicherheit kann vorteilhaft erhöht werden, da der Wischarmadapter ein ungewolltes Auslenken des zumindest einen Rastmittels sicher blockiert. Dadurch kann das zumindest eine Rastmittel besonders vorteilhaft mit einer hohen Flexibilität für eine besonders einfache Montage ausgebildet werden, wobei gleichzeitig eine Betriebssicherheit erhöht werden kann. Eine Bauhöhe der Wischblattadaptervorrichtung kann vorteilhaft gering gehalten werden.

Ferner wird vorgeschlagen, dass das zumindest eine Rastmittel dazu vorgesehen ist, bei einer Montage in eine seitliche Anlage mit dem Wischarmadapter zu kommen. Dadurch kann eine besonders stabile Aufnahme des Wischarmadapters erzielt werden. Unter einer "seitlichen Anlage" soll in diesem Zusammenhang insbesondere eine direkte Anlage verstanden werden, die zumindest einen Formschluss in Wischrichtung bildet.

Weiterhin wird vorgeschlagen, dass das zumindest eine Rastmittel und das zumindest eine weitere Rastmittel einen Aufnahmeraum zur formschlüssigen Aufnahme des Wischarmadapters aufspannen. Dadurch kann ein der Wischarmadapter besonders einfach aufgenommen werden und gleichzeitig eine zuverlässige Sicherung der Rastverbindung erzielt werden. Unter "aufspannen" soll in diesem Zusammenhang insbesondere zumindest an zwei entgegengesetzten Seiten begrenzen.

Ferner wird vorgeschlagen, dass die Adaptereinheit zumindest eine Seitenwandung umfasst, die dazu vorgesehen ist, das zumindest eine Rastmittel zumindest in eine Wischrichtung zu überdecken. Dadurch kann das zumindest eine Rastmittel vorteilhaft vor Witterungseinflüssen geschützt werden. Weiterhin kann eine besonders gute Aerodynamik erreicht werden. Zusätzlich kann eine hohe Ästhetik der Wischblattadaptervorrichtung erreicht werden.

Zudem wird vorgeschlagen, dass die Anlageflächen relativ zu einer Wischrichtung einen Winkel von zumindest im Wesentlichen 45° einschließen. Dadurch kann die Adaptereinheit vorteilhaft besonders kompakt ausgebildet werden. Ferner kann ein schräg zur zu wischenden Oberfläche angestellter Wischarmadapter besonders sicher aufgenommen werden.

Weiterhin wird ein System mit einer erfindungsgemäßen Wischblattadaptervorrichtung und mit einem Wischarmadapter vorgeschlagen, der dazu vorgesehen ist, eine Auslenkung des zumindest einen Rastmittels in einem montierten Zustand zu blockieren. Dadurch kann ein besonders sicherer Wischbetrieb, insbesondere auch bei hohen Fahrgeschwindigkeiten und/oder einer verschmutzen oder vereisten Fahrzeugscheibe erzielt werden.

Des Weiteren wird ein Verfahren zur Montage einer erfindungsgemäßen Wischblattadaptervorrichtung mit einem Wischarmadapter vorgeschlagen, wobei zumindest ein Rastmittel einer Adaptereinheit der Wischblattadaptervorrichtung während der Montage in Richtung einer Längsmittelebene der Adaptereinheit ausgelenkt wird. Dadurch kann eine besonders einfache und sichere Montage der Wischblattadaptervorrichtung mit dem Wischarmadapter erreicht werden. Vorteilhaft wird das zumindest eine Rastmittel nach einer Montage in Richtung der Längsmittelebene von dem Wischarmadapter blockiert.

Die erfindungsgemäße Wischblattadaptervorrichtung soll hierbei nicht auf die oben beschriebene Anwendung und Ausführungsform beschränkt sein. Insbesondere kann die erfindungsgemäße Wischblattadaptervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer Wischblattadaptervorrichtung und ein Wischarm in einer schematischen Seitenansicht,
- Fig. 2: die Wischblattadaptervorrichtung und ein Wischblattbauteil in einer perspektivischen Ansicht,
- Fig. 3: ein Adaptergrundkörper der Wischblattadaptervorrichtung in einer perspektivischen Ansicht,
- Fig. 4: eine Adaptereinheit der Wischblattadaptervorrichtung in einer Frontansicht,
- Fig. 5: die Adaptereinheit und der Adaptergrundkörper in einer Schnittdarstellung und
- Fig. 6: die Wischblattadaptervorrichtung in einer perspektivischen Ansicht.

### Beschreibung des Ausführungsbeispiels

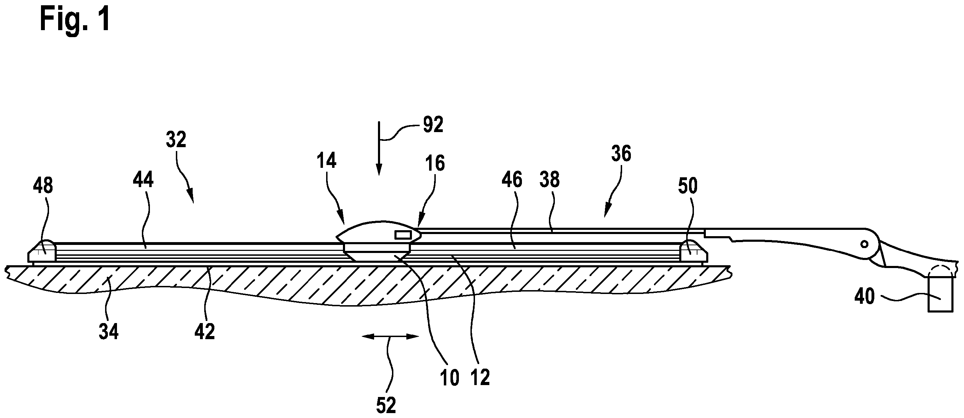

In der Figur 1 ist ein Wischblatt 32 mit einer Wischblattadaptervorrichtung schematisch gezeigt. Insbesondere eine Dimensionierung der gezeigten Bauteile kann dabei von der schematischen Darstellung abweichen. Das Wischblatt 32 bildet ein Flachwischblatt aus. Das Wischblatt 32 ist zum Reinigen einer Fahrzeugscheibe 34 vorgesehen. Das Wischblatt 32 ist lösbar mit einem Wischarm 36 gekoppelt. Der Wischarm 36 weist einen Wischarmadapter 16 auf. Der Wischarm 36 weist eine Wischstange 38 auf. Der Wischarmadapter 16 bildet einen Endbereich der Wischstange 38 aus. Der Wischarm 36 ist zur Befestigung an einer Antriebswelle 40 vorgesehen. Die Antriebswelle 40 ist von einem nicht näher dargestellten Antriebsmotor oszillierend drehbar ausgebildet.

Der Wischarm 36 und das daran montierte Wischblatt 32 sind in einer Schwenkbewegung über die Fahrzeugscheibe 34 pendelnd antreibbar. In einem Wischbetrieb streicht eine Wischlippe 42 des Wischblatts 32 über die Fahrzeugscheibe 34. Das Wischblatt 32 weist ein erstes Windabweiserelement 44 auf. Das erste Windabweiserelement 44 ist zur Abweisung von Fahrtwind und zur Erzeugung einer Anpresskraft des Wischblatts 32 in Richtung der Fahrzeugscheibe 34 vorgesehen. Das erste Windabweiserelement 44 erstreckt sich nahezu über eine Hälfte einer Gesamtlängserstreckung des Wischblatts 32. Das Wischblatt 32 weist ein zweites Windabweiserelement 46 auf. Das zweite Windabweiserelement 46 ist getrennt vom ersten Windabweiserelement 44 ausgebildet. Das erste Windabweiserelement 44 und das zweite Windabweiserelement 46 sind spiegelsymmetrisch zueinander ausgebildet. Das zweite Windabweiserelement 46 ist zur Abweisung von Fahrtwind und zur Erzeugung einer Anpresskraft des Wischblatts 32 in Richtung der Fahrzeugscheibe 34 vorgesehen. Das zweite Windabweiserelement 46 erstreckt sich nahezu über eine Hälfte einer Gesamtlängserstreckung des Wischblatts 32. Das Wischblatt 32 weist zwei Endkappen 48, 50 auf. Die Endkappen 48, 50 sind an gegenüberliegenden freien Enden des Wischblatts 32 angeordnet. Die Endkappen 48, 50 schließen das Wischblatt 32 in eine Längsrichtung 52 ab. Die Längsrichtung 52 erstreckt sich in einem montierten Zustand zumindest im Wesentlichen parallel zu einer Hauptlängserstreckungsrichtung des Wischblatts 32.

Die Wischblattadaptervorrichtung umfasst eine Adaptereinheit 14. Die Adaptereinheit 14 ist zu einer lösbaren Kopplung mit dem Wischarmadapter 16 vorgesehen. Der Wischarmadapter 16 ist zu einem Einführen in die Adaptereinheit 14 vorgesehen.

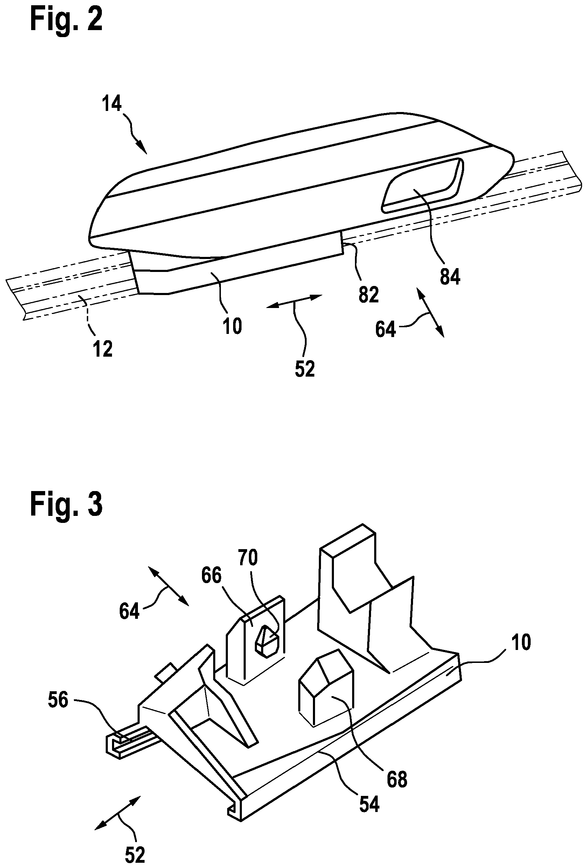

Die Wischblattadaptervorrichtung ist in der Figur 2 näher gezeigt. Die Wischblattadaptervorrichtung weist einen Adaptergrundkörper 10 auf. Der Adaptergrundkörper 10 ist dazu vorgesehen fest mit einem Wischblattbauteil 12 verbunden zu werden. Das Wischblattbauteil 12 stellt hier eine zweiteilige Federschiene dar. Es ist in diesem Zusammenhang jedoch auch denkbar, dass das Wischblattbauteil 12 ein anderes, dem Fachmann als sinnvoll erscheinendes Bauteil des Wischblatts 32 darstellt. Weitere Wischblatt- oder Wischarmbauteile sind der Übersichtlichkeit halber nicht dargestellt.

Die Adaptereinheit 14 ist dazu vorgesehen, mit dem Adaptergrundkörper 10 über eine Rastverbindung verbunden zu werden. Der Adaptergrundkörper 10 ist aus einem Kunststoff ausgebildet. Die Adaptereinheit 14 ist aus einem Kunststoff ausgebildet. Der Adaptergrundkörper 10 bildet Seitenkrallen 54, 56 aus (Figur 3). Die Seitenkrallen 54, 56 sind zu einem Umgreifen des Wischblattbauteils 12 vorgesehen.

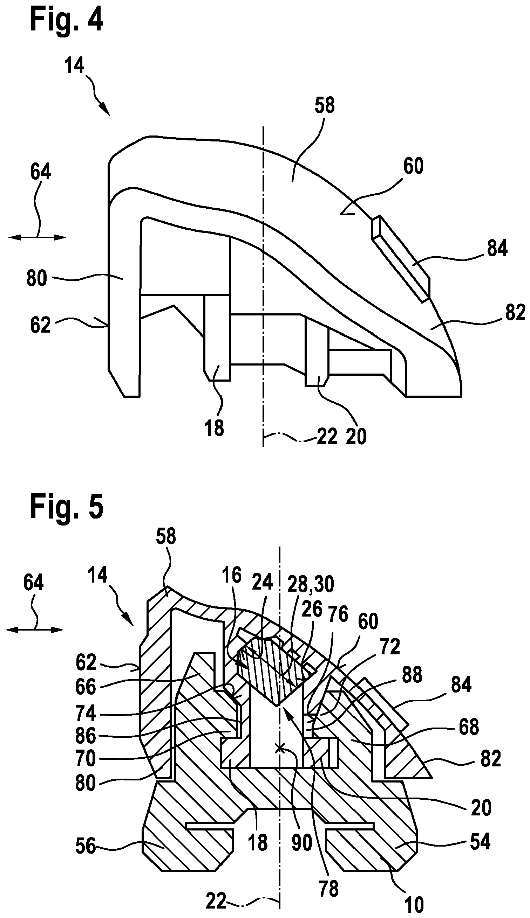

Wie in der Figur 4 gezeigt, umfasst die Adaptereinheit 14 ein Rastmittel 18 zur Verrastung mit dem Adaptergrundkörper 10. Das Rastmittel 18 ist einstückig mit einem Grundkörper 58 der Adaptereinheit 14 ausgebildet. Es ist in diesem Zusammenhang jedoch auch denkbar, dass das Rastmittel 18 mit dem Grundkörper 58 form- und/oder kraftschlüssig verbunden ist. Ferner umfasst die Adaptereinheit 14 ein weiteres Rastmittel 20 zur Verrastung mit dem Adaptergrundkörper 10. Das weitere Rastmittel 20 ist einstückig mit dem Grundkörper 58 der Adaptereinheit 14 ausgebildet. Es ist in diesem Zusammenhang jedoch auch denkbar, dass das weitere Rastmittel 20 mit dem Grundkörper 58 form- und/oder kraftschlüssig verbunden ist. Der Grundkörper 58 bildet eine Windanströmfläche 60 aus. Die Windanströmfläche 60 ist zumindest bereichsweise konvex ausgebildet. Rückwärtig bildet der Grundkörper 58 eine Rückseite 62, die sich zumindest im Wesentlichen senkrecht zu einer Wischrichtung 64 erstreckt. Die Adaptereinheit 14 umfasst ein Betätigungselement 84. Das Betätigungselement 84 ist dazu vorgesehen händisch betätigt zu werden und dabei eine nicht näher gezeigte Rastverbindung zwischen dem Wischarmadapter 16 und der Adaptereinheit 14 zu lösen. Dadurch kann der Wischarmadapter 16 von der Wischblattadaptervorrichtung entfernt werden.

Das Rastmittel 18 ist dazu vorgesehen, bei einer Montage mit dem Adaptergrundkörper 10 in Richtung einer Längsmittelebene 22 der Adaptereinheit 14 ausgelenkt zu werden. Das weitere Rastmittel 20 ist dazu vorgesehen, bei einer Montage mit dem Adaptergrundkörper 10 in Richtung einer Längsmittelebene 22 der Adaptereinheit 14 ausgelenkt zu werden. Die Längsmittelebene 22 ist eine gedachte Ebene, die sich senkrecht zur Wischrichtung 64 erstreckt und durch einen Schwerpunkt 90 des Adaptergrundkörpers 10 verläuft.

Das weitere Rastmittel 20 ist dazu vorgesehen, bei einer Montage mit dem Adaptergrundkörper 10 in Richtung des Rastmittels 18 ausgelenkt zu werden. Genauer gesagt, ist das weitere Rastmittel 20 dazu vorgesehen, bei einer Montage mit dem Adaptergrundkörper 10 in Richtung des Rastmittels 18 entgegen einer Federkraft ausgelenkt zu werden. Die Federkraft ergibt sich durch eine Materialverformung durch das Auslenken des jeweiligen Rastmittels 18, 20. Die Federkraft wirkt entgegen der Auslenkung des jeweiligen Rastmittels 18, 20. Das Rastmittel 18 und das weitere Rastmittel 20 sind somit dazu vorgesehen, bei einer Montage entgegen einer Federkraft aufeinander zu bewegt zu werden.

Wie in der Figur 5 gezeigt, weist der Adaptergrundkörper 10 zur Auslenkung der Rastmittel 18, 20 zwei Verbindungselemente 66, 68 auf. Die Verbindungselemente 66, 68 sind makroskopisch betrachtet steif ausgebildet. Die Verbindungselemente 66, 68 sind somit nicht dazu vorgesehen ausgelenkt zu werden. Die Verbindungselemente 66, 68 weisen jeweils ein Auslenkmittel 70, 72 auf. Die Auslenkmittel 70, 72 sind an einander zugewandten Seiten der Verbindungselemente 66, 68 angeordnet. Die Auslenkmittel 70, 72 sind einstückig mit den Verbindungselementen 66, 68 ausgebildet. Die Auslenkmittel 70, 72 weisen jeweils eine Auslenkfläche 74, 76 auf, die jeweils dazu vorgesehen sind, die Rastmittel 18, 20 während der Montage auszulenken. Die Auslenkflächen 74, 76 sind schräg zur Längsmittelebene 22 angeordnet. Genauer gesagt erstrecken sich die Auslenkflächen 74, 76 senkrecht zu einer Geraden, die einen spitzen Winkel zur Wischrichtung 64 einschließt und die zumindest im Wesentlichen einen rechten Winkel zur Längsrichtung 52 einschließt.

Das Rastmittel 18 und das weitere Rastmittel 20 umfassen jeweils eine Anlagefläche 24, 26 zur Anlage an den Wischarmadapter 16. Die Anlagefläche 24, 26 weisen in einem unausgelenkten Zustand einen Abstand 28 zueinander aufweisen, die einer Breite 30 des Wischarmadapters 16 entspricht. Die Anlageflächen 24, 26 schließen relativ zur Wischrichtung 64 einen Winkel von zumindest im Wesentlichen 45° ein. Das Rastmittel 18 ist dazu vorgesehen, bei einer Montage in eine seitliche Anlage mit dem Wischarmadapter 16 zu kommen. Das weitere Rastmittel 20 ist dazu vorgesehen, bei einer Montage in eine seitliche Anlage mit dem Wischarmadapter 16 zu kommen. Das Rastmittel 18 und das weitere Rastmittel 20 spannen einen Aufnahmeraum 78 zur formschlüssigen Aufnahme des Wischarmadapters 16 auf.

Das Rastmittel 18 und das weitere Rastmittel 20 weisen jeweils eine Rastausnehmung 86, 88 auf. Die Rastausnehmung 86 des Rastmittels 18 ist in eine von der Längsmittelebene 22 abgewandte Richtung hin geöffnet. Die Rastausnehmung 86 ist zur teilweisen Aufnahme des Auslenkmittels 70 vorgesehen. Die Rastausnehmung 88 des weiteren Rastmittels 20 durchdringt das weitere Rastmittel 20 in Wischrichtung 64 vollständig. Die Rastausnehmung 88 ist zur teilweisen Aufnahme des Auslenkmittels 72 vorgesehen.

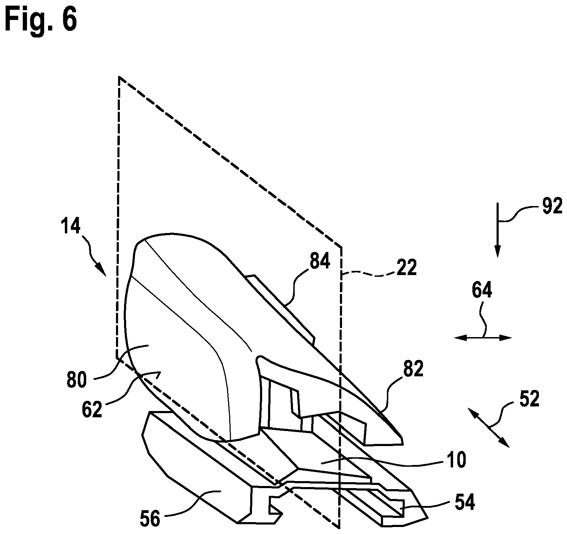

Wie weiter in der Figur 6 gezeigt, umfasst die Adaptereinheit 14 eine Seitenwandung 80. Die Seitenwandung 80 erstreckt sich zumindest im Wesentlichen senkrecht zur Wischrichtung 64. Die Seitenwandung 80 schließt die Adaptereinheit 14 in Wischrichtung 64 ab. Die Adaptereinheit 14 umfasst eine weitere Seitenwandung 82. Die weitere Seitenwandung 82 erstreckt sich zumindest im Wesentlichen senkrecht zu einer Geraden, die einen spitzen Winkel zur Wischrichtung 64 einschließt. Die weitere Seitenwandung 82 schließt die Adaptereinheit 14 in Wischrichtung 64 ab. Die Seitenwandung 80 ist dazu vorgesehen, das Rastmittel 18 in Wischrichtung 64 zu überdecken. Die weitere Seitenwandung 82 ist dazu vorgesehen, das weitere Rastmittel 20 in Wischrichtung 64 zu überdecken. Die Rastmittel 18, 20 sind zwischen den Seitenwandungen 80, 82 angeordnet.

Die Wischblattadaptervorrichtung bildet mit dem Wischarmadapter 16 ein System aus, wobei eine Auslenkung des Rastmittels 18 in einem montierten Zustand blockiert vom Wischarmadapter 16 ist. Ebenso ist in dem System eine Auslenkung des weiteren Rastmittels 20 im montierten Zustand vom Wischarmadapter 16 blockiert.

Im Folgenden wird der Montagevorgang der Adaptereinheit 14 mit dem Adaptergrundkörper 10 und dem Wischarmadapter 16 näher erläutert. Der Adaptergrundkörper 10 ist bereits fest mit dem Wischblattbauteil 12 verbunden. Die Adaptereinheit 14 wird in eine Vertikalrichtung 92 an den Adaptergrundkörper 10 geführt. Die Vertikalrichtung 92 steht senkrecht zur Wischrichtung 64 und senkrecht zur Längsrichtung 52. Die Vertikalrichtung 92 weist in einem Betriebszustand in Richtung der Fahrzeugscheibe 34.

Die Rastmittel 18, 20 kommen in Anlage mit den Auslenkmitteln 70, 72 und werden von diesen derart ausgelenkt, dass sie sich aus einer Ausgangslage entgegen einer Federkraft aufeinander zubewegen. In einer Endposition bewegen sich die Rastmittel 18, 20 federelastisch zurück die Ausgangslage und verrasten hinter den Auslenkmitteln 70, 72. Abschließend wird der Wischarmadapter 16 zwischen die Rastmittel 18, 20 geführt. Der Wischarmadapter 16 kommt dabei in Anlage mit den Rastmitteln 18, 20. In einer Endmontageposition werden das Rastmittel 18 und das weitere Rastmittel 20 in Richtung der Längsmittelebene 22 von dem Wischarmadapter 16 blockiert.

## Patentansprüche

1. Wischblattadaptervorrichtung mit einem Adaptergrundkörper (10), der dazu vorgesehen ist, fest mit einem Wischblattbauteil (12) verbunden zu werden, und mit einer Adaptereinheit (14), die zu einer lösbaren Kopplung mit einem Wischarmadapter (16) vorgesehen ist, und wobei die Adaptereinheit (14) dazu vorgesehen ist, mit dem Adaptergrundkörper (10) über eine Rastverbindung verbunden zu werden, **dadurch gekennzeichnet, dass** die Adaptereinheit (14) zumindest ein Rastmittel (18) zur Verrastung mit dem Adaptergrundkörper (10) umfasst, das dazu vorgesehen ist, bei einer Montage mit dem Adaptergrundkörper (10) zumindest teilweise in Richtung einer Längsmittelebene (22) der Adaptereinheit (14) ausgelenkt zu werden.

2. Wischblattadaptervorrichtung nach Anspruch 1, **dadurch gekennzeichnet, dass** die Adaptereinheit (14) zumindest ein weiteres Rastmittel (20) zur Verrastung mit dem Adaptergrundkörper (10) umfasst, das dazu vorgesehen ist, bei einer Montage mit dem Adaptergrundkörper (10) zumindest teilweise in Richtung des zumindest einen Rastmittels (18) ausgelenkt zu werden.

3. Wischblattadaptervorrichtung nach Anspruch 2, **dadurch gekennzeichnet, dass** das zumindest eine Rastmittel (18) und das zumindest eine weitere Rastmittel (20) jeweils eine Anlagefläche (24, 26) zur Anlage an den Wischarmadapter (16) umfassen, die in einem unausgelenkten Zustand einen Abstand (28) zueinander aufweisen, die einer Breite (30) des Wischarmadapters (16) zumindest im Wesentlichen entspricht.

4. Wischblattadaptervorrichtung nach einem der vorhergehenden Ansprüche, **dadurch gekennzeichnet, dass** das zumindest eine Rastmittel (18, 20) dazu vorgesehen ist, bei einer Montage in eine seitliche Anlage mit dem Wischarmadapter (16) zu kommen.

5. Wischblattadaptervorrichtung zumindest nach Anspruch 2, **dadurch gekennzeichnet, dass** das zumindest eine Rastmittel (18) und das zumindest eine weitere Rastmittel (20) einen Aufnahmeraum (78) zur formschlüssigen Aufnahme des Wischarmadapters (16) aufspannen.

6. Wischblattadaptervorrichtung nach einem der vorhergehenden Ansprüche, **dadurch gekennzeichnet, dass** die Adaptereinheit (14) zumindest eine Seitenwandung (80, 82) umfasst, die dazu vorgesehen ist, das zumindest eine Rastmittel (18, 20) zumindest in eine Wischrichtung (64) zu überdecken.

7. Wischblattadaptervorrichtung zumindest nach Anspruch 3, **dadurch gekennzeichnet, dass** die Anlageflächen (24, 26) relativ zu einer Wischrichtung (64) einen Winkel von zumindest im Wesentlichen 45° einschließen.

8. Wischblatt (32) mit einer Wischblattadaptervorrichtung nach einem der vorhergehenden Ansprüche.

9. System mit einer Wischblattadaptervorrichtung nach einem der Ansprüche 1 bis 7, und mit einem Wischarmadapter (16), der dazu vorgesehen ist, eine Auslenkung des zumindest einen Rastmittels (18, 20) in einem montierten Zustand zu blockieren.

10. Verfahren zur Montage einer Wischblattadaptervorrichtung nach einem der Ansprüche 1 bis 7, mit einem Wischarmadapter (16), **dadurch gekennzeichnet, dass** das zumindest eine Rastmittel (18, 20) der Adaptereinheit (14) der Wischblattadaptervorrichtung während der Montage in Richtung einer Längsmittelebene (22) der Adaptereinheit (14) ausgelenkt wird.

## Claims

1. Wiper blade adapter device having an adapter base member (10) which is provided to be securely connected to a wiper blade component (12) and having an adapter unit (14) which is provided for releasable coupling to a wiper arm adapter (16), and wherein the adapter unit (14) is provided to be connected to the adapter base member (10) by means of a locking connection, **characterized in that** the adapter unit (14) comprises at least one locking means (18) for engagement with the adapter base member (10), which is provided, during assembly with the adapter base member (10), to be deflected at least partially in the direction of a longitudinal centre plane (22) of the adapter unit (14).

2. Wiper blade adapter device according to Claim 1, **characterized in that** the adapter unit (14) comprises at least one additional locking means (20) for engagement with the adapter base member (10) which is provided, during assembly with the adapter base member (10), to be deflected at least partially in the direction of the at least one locking means (18).

3. Wiper blade adapter device according to Claim 2, **characterized in that** the at least one locking means (18) and the at least one additional locking means (20) each comprise an abutment face (24, 26) for abutment against the wiper arm adapter (16) which in a non-deflected state have a spacing (28) with respect to each other which at least substantially corresponds to a width (30) of the wiper arm adapter (16).

4. Wiper blade adapter device according to one of the preceding claims, **characterized in that** the at least one locking means (18, 20) is provided to move into lateral abutment with the wiper arm adapter (16) during assembly.

5. Wiper blade adapter device at least according to Claim 2, **characterized in that** the at least one locking means (18) and the at least one additional locking means (20) define a receiving space (78) for positive-locking receiving of the wiper arm adapter (16).

6. Wiper blade adapter device according to one of the preceding claims, **characterized in that** the adapter unit (14) comprises at least one side wall (80, 82) which is provided to cover the at least one locking means (18, 20) at least in one wiping direction (64).

7. Wiper blade adapter device at least according to Claim 3, **characterized in that** the abutment faces (24, 26) define relative to a wiping direction (64) an angle of at least substantially 45°.

8. Wiper blade (32) having a wiper blade adapter device according to one of the preceding claims.

9. System having a wiper blade adapter device according to one of Claims 1 to 7 and having a wiper arm adapter (16) which is provided to block a deflection of the at least one locking means (18, 20) in an assembled state.

10. Method for assembling a wiper blade adapter device according to one of Claims 1 to 7, with a wiper arm adapter (16), **characterized in that** the at least one locking means (18, 20) of the adapter unit (14) of the wiper blade adapter device is deflected during the assembly in the direction of a longitudinal centre plane (22) of the adapter unit (14).

## Revendications

1. Dispositif adaptateur de balai d'essuie-glace comportant un corps de base d'adaptateur (10), qui est destiné à être relié solidement à un composant de balai d'essuie-glace (12), et comportant une unité d'adaptateur (14), qui est destinée à être accouplée de manière amovible à un adaptateur de bras d'essuie-glace (16), et dans lequel l'unité d'adaptateur (14) est destinée à être reliée au corps de base d'adaptateur (10) par le biais d'une liaison par encliquetage, **caractérisé en ce que** l'unité d'adaptateur (14) comporte au moins un moyen d'encliquetage (18) pour l'encliquetage avec le corps de base d'adaptateur (10), lequel moyen d'encliquetage est destiné à être dévié au moins partiellement en direction d'un plan médian longitudinal (22) de l'unité d'adaptateur (14) lors d'un montage avec le corps de base d'adaptateur (10).

2. Dispositif adaptateur de balai d'essuie-glace selon la revendication 1, **caractérisé en ce que** l'unité d'adaptateur (14) comporte au moins un autre moyen d'encliquetage (20) pour l'encliquetage avec le corps de base d'adaptateur (10), lequel autre moyen d'encliquetage est destiné à être dévié au moins partiellement en direction de l'au moins un moyen d'encliquetage (18) lors d'un montage avec le corps de base d'adaptateur (10).

3. Dispositif adaptateur de balai d'essuie-glace selon la revendication 2, **caractérisé en ce que** l'au moins un moyen d'encliquetage (18) et l'au moins un autre moyen d'encliquetage (20) comportent respectivement une surface d'appui (24, 26) pour l'appui contre l'adaptateur de bras d'essuie-glace (16), lesquelles surfaces d'appui sont situées à une distance (28) l'une de l'autre dans un état non dévié, laquelle distance correspond au moins sensiblement à une largeur (30) de l'adaptateur de bras d'essuie-glace (16).

4. Dispositif adaptateur de balai d'essuie-glace selon l'une des revendications précédentes, **caractérisé en ce que** l'au moins un moyen d'encliquetage (18, 20) est destiné à venir en appui latéralement avec l'adaptateur de bras d'essuie-glace (16) lors d'un montage.

5. Dispositif adaptateur de balai d'essuie-glace au moins selon la revendication 2, **caractérisé en ce que** l'au moins un moyen d'encliquetage (18) et l'au moins un autre moyen d'encliquetage (20) définissent un espace de réception (78) pour la réception avec complémentarité de forme de l'adaptateur de bras d'essuie-glace (16).

6. Dispositif adaptateur de balai d'essuie-glace selon l'une des revendications précédentes, **caractérisé en ce que** l'unité d'adaptateur (14) comporte au moins une paroi latérale (80, 82) qui est destinée à recouvrir l'au moins un moyen d'encliquetage (18, 20) au moins dans une direction d'essuyage (64).

7. Dispositif adaptateur de balai d'essuie-glace au moins selon la revendication 3, **caractérisé en ce que** les surfaces d'appui (24, 26) forment, par rapport à une direction d'essuyage (64), un angle d'au moins sensiblement 45°.

8. Balai d'essuie-glace (32) comportant un dispositif adaptateur de balai d'essuie-glace selon l'une des revendications précédentes.

9. Système comportant un dispositif adaptateur de balai d'essuie-glace selon l'une des revendications 1 à 7, et comportant un adaptateur de bras d'essuie-glace (16), qui est destiné à bloquer une déviation de l'au moins un moyen d'encliquetage (18, 20) dans un état monté.

10. Procédé de montage d'un dispositif adaptateur de balai d'essuie-glace selon l'une des revendications 1 à 7, avec un adaptateur de bras d'essuie-glace (16), **caractérisé en ce que** l'au moins un moyen d'encliquetage (18, 20) de l'unité d'adaptateur (14) du dispositif adaptateur de balai d'essuie-glace est dévié en direction d'un plan médian longitudinal (22) de l'unité d'adaptateur (14) pendant le montage.
